# EUROPEAN PATENT APPLICATION

(11) **EP 4 395 241 A1**
(43) Date of publication of application: **03.07.2024**
(21) Application number: 23160276.4
(22) Date of filing: 06.03.2023
(51) Int. Cl.: H04L 12/14, H04M 15/00, H04W 4/24

(54) **ACCOUNTING ADJUSTMENT FOR PACKET DROPS OCCURRING IN MOBILE NETWORKS**

(30) Priority: 27.12.2022 US 202218146630
(71) Applicant: Juniper Networks, Inc., Sunnyvale, CA 94089 (US)
(72) Inventor: PADEBETTU, Venkatesh, Sunnyvale, 94089 (US)
(74) Representative: D Young & Co LLP

(57) **Abstract**

A network device may receive information associated with a protocol data unit (PDU) session of a subscriber, and may determine whether the information associated with the PDU session indicates that one or more packet drops occurred during the PDU session. The network device may generate an accounting adjustment container based on one or more packet drops occurring during the PDU session, and may provide the accounting adjustment container to a peer endpoint to cause the peer endpoint to utilize the accounting adjustment container to calculate a usage report for the subscriber.

## Description

### BACKGROUND

In mobile networks, such as fourth-generation (4G) or fifth-generation (5G) networks, subscriber accounting is performed by a network device (e.g., a user plane function (UPF) in 5G networks) and then forwarded to a radio access network (RAN) node (e.g., a gNodeB or gNB in 5G networks) in a wireless network and an access gateway function (AGF) in a wireline access network (AN) after tunneling subscriber traffic in general packet radio service (GPRS) tunnelling protocol user data tunneling (GTP-U).

### SUMMARY

Particular embodiments are set out in the independent claims. Various optional examples are set out in the dependent claims. Some implementations described herein relate to a method. The method may include receiving information associated with a protocol data unit (PDU) session of a subscriber, and determining whether the information associated with the PDU session indicates that one or more packet drops occurred during the PDU session. The method may include generating an accounting adjustment container based on one or more packet drops occurring during the PDU session, and providing the accounting adjustment container to a peer endpoint to cause the peer endpoint to utilize the accounting adjustment container to calculate a usage report for the subscriber.

Some implementations described herein relate to a network device. The network device may include one or more memories and one or more processors. The one or more processors may be configured to receive information associated with a PDU session of a subscriber, and determine whether the information associated with the PDU session indicates that one or more packet drops occurred during the PDU session. The one or more processors may be configured to selectively prevent an accounting adjustment container from being generated based on no packet drops occurring during the PDU session; or generate the accounting adjustment container based on one or more packet drops occurring during the PDU session, and provide the accounting adjustment container to a peer endpoint to cause the peer endpoint to utilize the accounting adjustment container to calculate a usage report for the subscriber.

Some implementations described herein relate to a computer-readable medium that encodes a set of instructions for a network device. The set of instructions, when executed by one or more processors of the network device, may cause the network device to receive information associated with a PDU session of a subscriber, and determine whether the information associated with the PDU session indicates that one or more packet drops occurred during the PDU session. The set of instructions, when executed by one or more processors of the network device, may cause the network device to generate an accounting adjustment container based on one or more packet drops occurring during the PDU session, and provide the accounting adjustment container to a peer endpoint, where the accounting adjustment container causes the peer endpoint to utilize the accounting adjustment container to calculate a usage report for the subscriber and to provide the usage report to a core network.

### BRIEF DESCRIPTION OF THE DRAWINGS

Figs. 1A-1E are diagrams of an example associated with providing an accounting adjustment for packet drops occurring in mobile networks.
Fig. 2 is a diagram of an example environment in which systems and/or methods described herein may be implemented.
Figs. 3 and 4 are diagrams of example components of one or more devices of Fig. 2.
Fig. 5 is a flowchart of an example process for providing an accounting adjustment for packet drops occurring in mobile networks.

### DETAILED DESCRIPTION

The following detailed description of example implementations refers to the accompanying drawings. The same reference numbers in different drawings may identify the same or similar elements.

Subscriber accounting in mobile networks assumes that there are no packet drops associated with the RAN nodes or the wireline AN nodes. However, the Third Generation Partnership Project (3GPP) defines some policies for the AN node which are per subscriber (e.g., a user device or a routing gateway) and may result in packet drops associated with the subscriber. Packet drops may also occur at the AGF due to congestion in a wireline access network, disconnection of a subscriber, link failure in the access network, and/or the like. Such packet drops create a differential between actual packets that are received by the subscriber and accounted-for/billed packets. Thus, current network configurations consume computing resources (e.g., processing resources, memory resources, communication resources, and/or the like), networking resources, and/or other resources associated with improperly charging subscribers for packets that are dropped, handling subscriber complaints associated with improper billing of the subscribers, attempting and failing to identify dropped packets for the subscribers, and/or the like.

Some implementations described herein provide a network device (e.g., an AGF) that provides an accounting adjustment for packet drops occurring in wireline access networks and can be extended to wireless networks. For example, the AGF may receive information associated with a PDU session of a subscriber, and may determine whether the information associated with the PDU session indicates that one or more packet drops occurred during the PDU session. The AGF may generate an accounting adjustment container based on one or more packet drops occurring during the PDU session, and may provide the accounting adjustment container to a peer endpoint (e.g., a UPF) to cause the peer endpoint to utilize the accounting adjustment container to calculate a usage report for the subscriber.

In this way, the AGF provides an accounting adjustment for packet drops occurring in wireline access networks. For example, the AGF may define a PDU accounting adjustment container as an extension header in GTP-U. Since the AGF does not have a channel for reporting accounting information and the UPF is responsible for reporting accounting information via usage reporting rules, the AGF may utilize the PDU accounting adjustment container to send, to the UPF, information about any packets dropped at the AGF so that the UPF can adjust accounting information provided to a core network (e.g., a 5G core network). The PDU accounting adjustment container may be defined so that an accounting adjustment can be positive or negative. If no accounting adjustment is needed, the AGF may not send the PDU accounting adjustment container to the UPF. Thus, the AGF may conserve computing resources, networking resources, and/or other resources that would have otherwise been consumed by improperly charging subscribers for packets that are dropped, handling subscriber complaints associated with improper billing of the subscribers, attempting and failing to identify dropped packets for the subscribers, and/or the like.

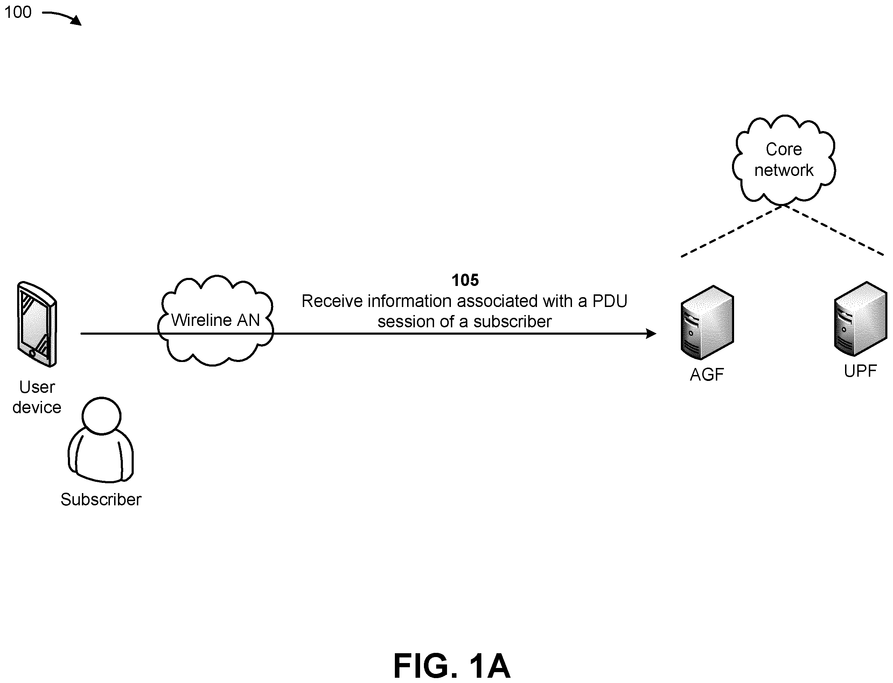

Figs. 1A-1E are diagrams of an example 100 associated with providing an accounting adjustment for packet drops occurring in mobile networks. As shown in Figs. 1A-1E, example 100 includes a user device (e.g., a wireless routing gateway, a fixed network routing gateway, and/or the like), a wireline AN, and a core network that includes an AGF and a UPF. The AGF may apply services at an aggregated level for all PDU sessions, and may not report usage to the core network. The AGF may be over-subscribed and may utilize shaping and/or scheduling to ensure that priority traffic is not dropped. The UPF may apply services per PDU session, and may report usage (e.g., accounting) per PDU session to the core network. The UPF may not be over-subscribed and may utilize call admission control (CAC) to ensure that each PDU can be serviced. Further details of the user device, the wireline AN, the core network, the AGF, and the UPF are provided elsewhere herein.

As shown in Fig. 1A, and by reference number 105, the AGF may receive information associated with a PDU session of a subscriber. For example, a subscriber may utilize the user device to establish a PDU session with a data network (e.g., the Internet), via the wireline AN and the core network. The PDU session may include downlink traffic (e.g., packets) that is provided from the data network to the user device. The UPF may provide the downlink traffic from the data network to the AGF, and may account for the downlink traffic provided from the data network to the AGF. The AGF may provide the downlink traffic to the user device (e.g., the subscriber), and may receive or determine the information associated with the PDU session of the subscriber based on providing the downlink traffic to the user device. The information associated with the PDU session may include information indicating whether one or more packets (e.g., of the downlink traffic) are dropped by the AGF and not provided to the user device (e.g., the subscriber). Any dropped packets will be accounted for by the UPF but will not be delivered to the user device. In some implementations, a packet drop may occur (e.g., at the AGF) during the PDU session due to congestion in an access network, disconnection of the subscriber, link failure in the access network, policy enforcement at the user device, congestion on an egress port of the AGF, access link failure or temporary flap at the AGF, and/or the like.

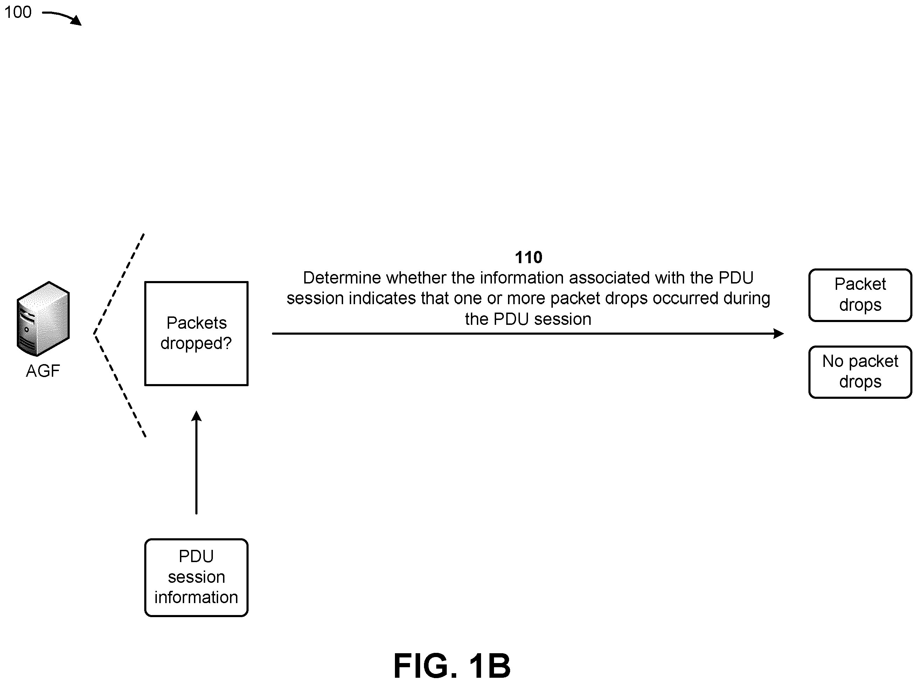

As shown in Fig. 1B, and by reference number 110, the AGF may determine whether the information associated with the PDU session indicates that one or more packet drops occurred during the PDU session. For example, the AGF may determine whether the information associated with the PDU session indicates that one or more packets (e.g., of the downlink traffic) are dropped by the AGF and not provided to the user device (e.g., the subscriber). In some implementations, the AGF may determine that the information associated with the PDU session indicates that one or more packet drops occurred during the PDU session. Alternatively, the AGF may determine that the information associated with the PDU session indicates that no packet drops occurred during the PDU session.

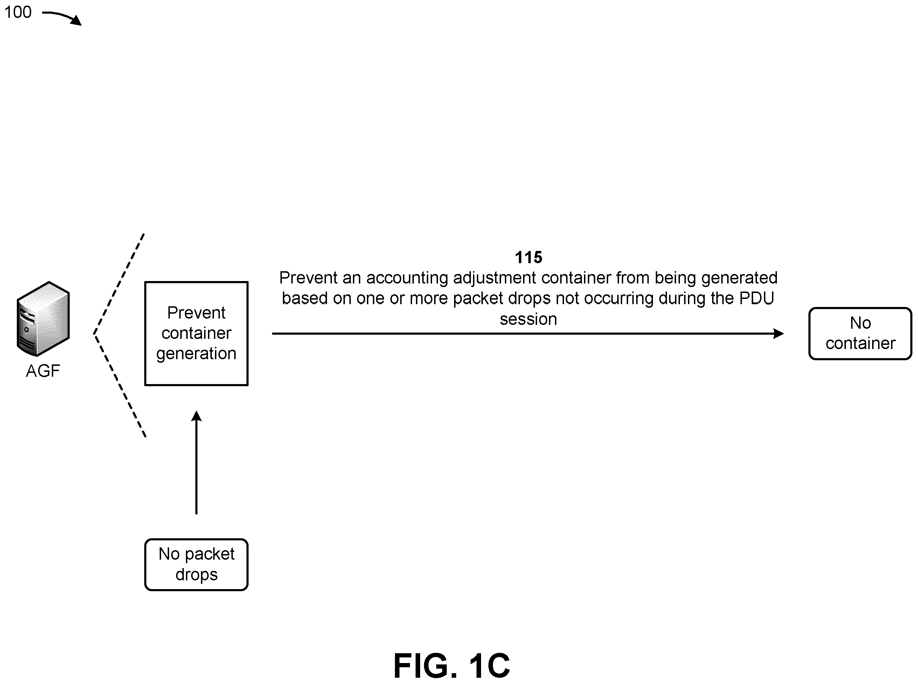

As shown in Fig. 1C, and by reference number 115, the AGF may determine not to generate an accounting adjustment container based on one or more packet drops not occurring during the PDU session. For example, if the AGF determines that the information associated with the PDU session indicates that no packet drops occurred during the PDU session, the AGF may not generate an accounting adjustment container. The accounting adjustment container may include information identifying a quantity of packet drops by the AGF during the PDU session. The quantity of packet drops may be utilized (e.g., by the UPF) to adjust an accounting of packets charged to the subscriber but not received by the subscriber. Thus, if no packet drops occur at the AGF, the quantity of packet drops is zero and the AGF need not generate the accounting adjustment container.

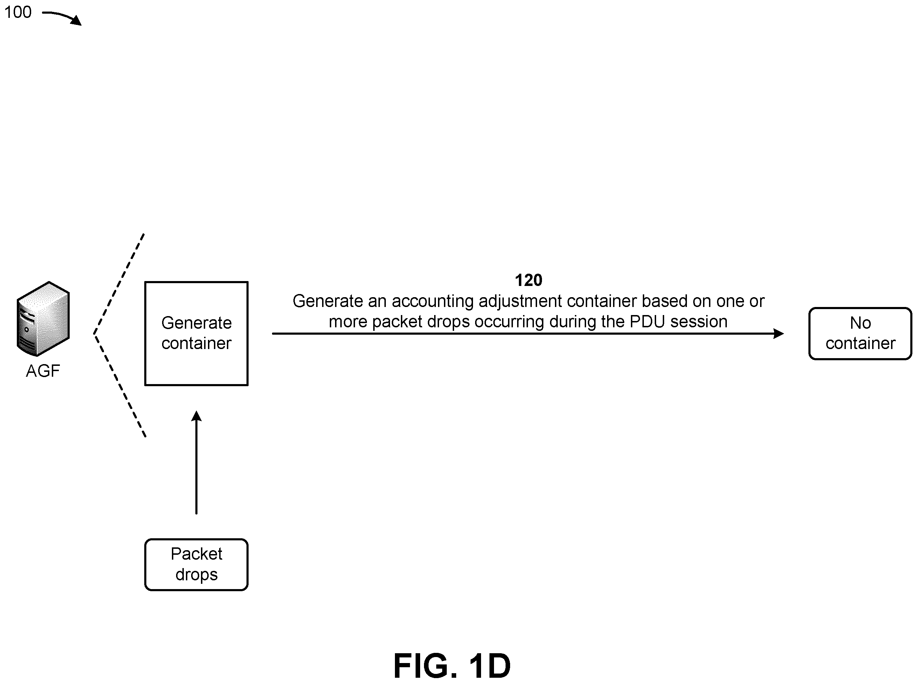

As shown in Fig. 1D, and by reference number 120, the AGF may generate an accounting adjustment container based on one or more packet drops occurring during the PDU session. For example, if the AGF determines that the information associated with the PDU session indicates that one or more packet drops occurred during the PDU session, the AGF may generate the accounting adjustment container. The accounting adjustment container may include information identifying a quantity of the one or more packet drops by the AGF during the PDU session. In some implementations, the accounting adjustment container may be included as an extension header of a GTP-U packet (e.g., to report accounting adjustment information to a peer endpoint, such as the UPF). In some implementations, the extension header may be included with (e.g., piggy-backed with) another extension header of the GTP-U packet. The extension header may be comprehended by the peer endpoint but not by intermediate network devices of the network. The intermediate network devices may forward the extension header to the peer endpoint.

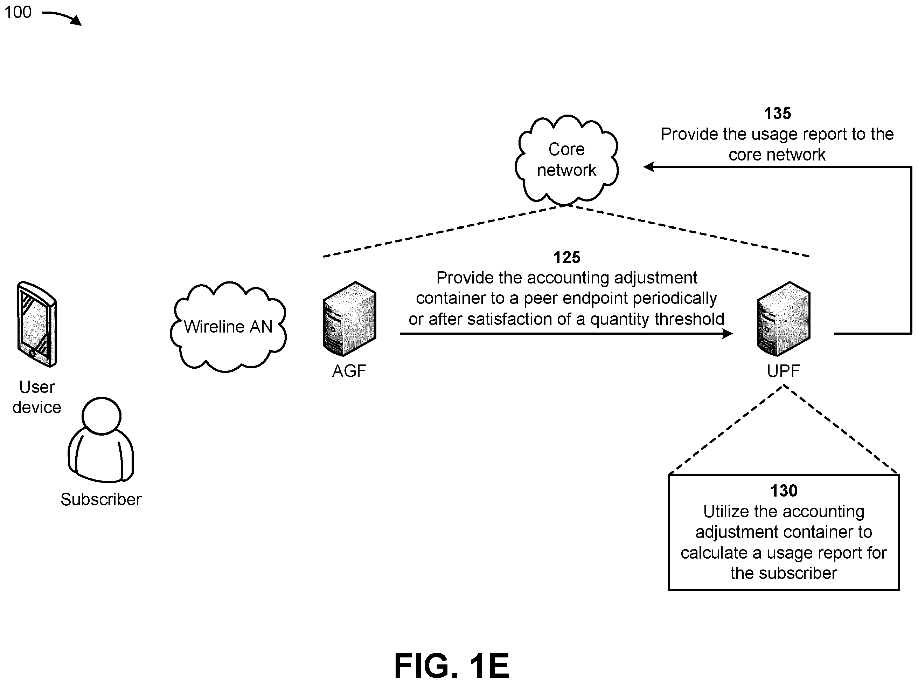

As shown in Fig. 1E, and by reference number 125, the AGF may provide the accounting adjustment container to a peer endpoint periodically or after satisfaction of a threshold volume. For example, to provide the accounting adjustment container to the peer endpoint, the AGF may provide the accounting adjustment container to the peer endpoint after a time period (e.g., in seconds, minutes, and/or the like). In some implementations, to provide the accounting adjustment container to the peer endpoint, the AGF may determine whether a quantity of the one or more packet drops occurring during the PDU session satisfies a quantity threshold. The AGF may provide the accounting adjustment container to the peer endpoint based on the quantity of the one or more packet drops occurring during the PDU session satisfying the quantity threshold.

In some implementations, to provide the accounting adjustment container to the peer endpoint, the AGF may provide the accounting adjustment container to the peer endpoint via an interface provided between the AGF and the peer endpoint (e.g., the UPF), when the AGF and the UPF are collocated. The accounting adjustment container need not be provided in the extension header when provided to the peer endpoint via the interface. In some implementations, when the subscriber terminates the PDU session, the AGF may receive an indication of the subscriber termination of the PDU session, and may provide, based on receiving the indication, the accounting adjustment container to the peer endpoint before a data plane is cleared. When the subscriber terminates the PDU session, the peer endpoint (e.g., the UPF) may wait for the accounting adjustment container before calculating a usage report. In some implementations, the AGF may generate another accounting adjustment container for packet drops associated with uplink traffic provided from the user device to the data network. The accounting adjustment container (e.g., for downlink traffic packet drops) and the other accounting adjustment container (e.g., for uplink traffic drops) may be included in the extension header of the GTP-U packet.

As further shown in Fig. 1E, and by reference number 130, the UPF may utilize the accounting adjustment container to calculate a usage report for the subscriber. For example, the UPF may receive the accounting adjustment container, and may calculate the usage report for the subscriber based on a quantity of packets associated with the downlink traffic and the uplink traffic and based on the quantity of the one or more packet drops at the AGF during the PDU session (e.g., identified in the account adjustment container). In some implementations, the UPF may subtract the quantity of the one or more packet drops from the quantity of packets associated with the downlink traffic and the uplink traffic when calculating the usage report for the subscriber. In this way, the subscriber may not be charged for packets never received by the subscriber or packets sent by the subscriber but dropped at the AGF.

As further shown in Fig. 1E, and by reference number 135, the UPF may provide the usage report to the core network. For example, the UPF may provide the usage report to one or more network functions of the core network. The one or more functions of the core network may generate a bill for the subscriber based on the usage report, and may cause the bill to be provided to the subscriber.

In this way, the AGF provides an accounting adjustment for packet drops occurring in wireline access networks. For example, the AGF may define a PDU accounting adjustment container as an extension header in GTP-U. Since AGF does not have a channel for reporting accounting information to the 5G control plane and the UPF is responsible for reporting accounting information via usage reporting rules, the AGF may utilize the PDU accounting adjustment container to send, to the UPF, information about any packets dropped at the AGF so that the UPF can adjust accounting information provided to a core network (e.g., a 5G core network). The PDU accounting adjustment container may be defined so that an accounting adjustment can be positive or negative. If no accounting adjustment is needed, the AGF may not send the PDU accounting adjustment container to the UPF. Thus, the AGF may conserve computing resources, networking resources, and/or other resources that would have otherwise been consumed by improperly charging subscribers for packets that are dropped, handling subscriber complaints associated with improper billing of the subscribers, attempting and failing to identify dropped packets for the subscribers, and/or the like.

As indicated above, Figs. 1A-1E are provided as an example. Other examples may differ from what is described with regard to Figs. 1A-1E. The number and arrangement of devices shown in Figs. 1A-1E are provided as an example. In practice, there may be additional devices, fewer devices, different devices, or differently arranged devices than those shown in Figs. 1A-1E. Furthermore, two or more devices shown in Figs. 1A-1E may be implemented within a single device, or a single device shown in Figs. 1A-1E may be implemented as multiple, distributed devices. Additionally, or alternatively, a set of devices (e.g., one or more devices) shown in Figs. 1A-1E may perform one or more functions described as being performed by another set of devices shown in Figs. 1A-1E.

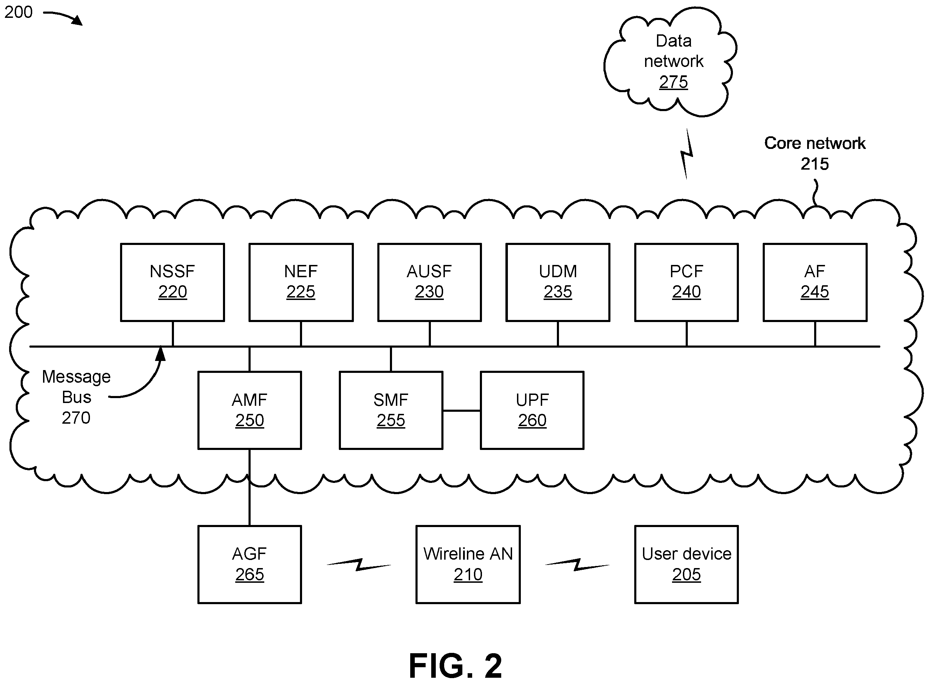

Fig. 2 is a diagram of an example environment 200 in which systems and/or methods described herein may be implemented. As shown in Fig. 2, the example environment 200 may include the user device 205, the wireline AN 210, the core network 215, and a data network 275. Devices and/or networks of the example environment 200 may interconnect via wired connections, wireless connections, or a combination of wired and wireless connections.

The user device 205 includes one or more devices capable of receiving, generating, storing, processing, and/or providing information, such as information described herein. For example, the user device 205 can include a mobile phone (e.g., a smart phone or a radiotelephone), a laptop computer, a tablet computer, a desktop computer, a handheld computer, a gaming device, a wearable communication device (e.g., a smart watch or a pair of smart glasses), a mobile hotspot device, a fixed wireless access device, customer premises equipment, an autonomous vehicle, or a similar type of device.

The wireline AN 210 may support, for example, a wireline access technology. The wireline AN 210 may include one or more network elements (e.g., digital subscriber line access multiplexers (DSLAMs)s, optical line termination (OLTs), cable termination devices, or similar types of devices) and other network entities that can support wireline communication for the user device 205. The wireline AN 210 may transfer traffic between the user device 205, one or more network elements, and/or the core network 215.

In some implementations, the wireline AN 210 may perform scheduling and/or resource management for the user device 205 covered by the wireline AN 210 (e.g., the user device 205 covered by a network element provided by the wireline AN 210). In some implementations, the wireline AN 210 may be controlled or coordinated by a network controller, which may perform load balancing, network-level configuration, and/or other operations. In some implementations, the wireline AN 210 may include a network controller, a self-organizing network (SON) module or component, or a similar module or component. In other words, the wireline AN 210 may perform network control, scheduling, and/or network management functions (e.g., for uplink, downlink, and/or sidelink communications of the user device 205 covered by the wireline AN 210).

In some implementations, the core network 215 may include an example functional architecture in which systems and/or methods described herein may be implemented. For example, the core network 215 may include an example architecture of a 5G next generation (NG) core network included in a 5G wireless telecommunications system. While the example architecture of the core network 215 shown in Fig. 2 may be an example of a service-based architecture, in some implementations, the core network 215 may be implemented as a reference-point architecture and/or a 4G core network, among other examples.

As shown in Fig. 2, the core network 215 may include a number of functional elements. The functional elements may include, for example, a network slice selection function (NSSF) 220, a network exposure function (NEF) 225, an authentication server function (AUSF) 230, a unified data management (UDM) component 235, a policy control function (PCF) 240, an application function (AF) 245, an access and mobility management function (AMF) 250, a session management function (SMF) 255, a UPF 260, and/or an AGF 265. These functional elements may be communicatively connected via a message bus 270. Each of the functional elements shown in Fig. 2 is implemented on one or more devices associated with a wireless telecommunications system. In some implementations, one or more of the functional elements may be implemented on physical devices, such as an access point, a base station, and/or a gateway. In some implementations, one or more of the functional elements may be implemented on a computing device of a cloud computing environment.

The NSSF 220 includes one or more devices that select network slice instances for the user device 205. By providing network slicing, the NSSF 220 allows an operator to deploy multiple substantially independent end-to-end networks potentially with the same infrastructure. In some implementations, each slice may be customized for different services.

The NEF 225 includes one or more devices that support exposure of capabilities and/or events in the wireless telecommunications system to help other entities in the wireless telecommunications system discover network services.

The AUSF 230 includes one or more devices that act as an authentication server and support the process of authenticating the user device 205 in the wireless telecommunications system.

The UDM 235 includes one or more devices that store user data and profiles in the wireless telecommunications system. The UDM 235 may be used for fixed access and/or mobile access in the core network 215.

The PCF 240 includes one or more devices that provide a policy framework that incorporates network slicing, roaming, packet processing, and/or mobility management, among other examples.

The AF 245 includes one or more devices that support application influence on traffic routing, access to the NEF 225, and/or policy control, among other examples.

The AMF 250 includes one or more devices that act as a termination point for non-access stratum (NAS) signaling and/or mobility management, among other examples.

The SMF 255 includes one or more devices that support the establishment, modification, and release of communication sessions in the wireless telecommunications system. For example, the SMF 255 may configure traffic steering policies at the UPF 260 and/or may enforce user equipment IP address allocation and policies, among other examples.

The UPF 260 includes one or more devices that serve as an anchor point for intraRAT and/or interRAT mobility and that provide authentication, authorization and accounting (AAA) services. The UPF 260 may apply rules to packets, such as rules pertaining to packet routing, traffic reporting, and/or handling user plane QoS, among other examples.

The AGF 265 includes one or more devices that provide hierarchical traffic shaping and policing for fixed network (FN) and 5G residential gateways (RGs) being served from the UPF 260 within the 5G core network 230.

The message bus 270 represents a communication structure for communication among the functional elements. In other words, the message bus 270 may permit communication between two or more functional elements.

The data network 275 includes one or more wired and/or wireless data networks. For example, the data network 275 may include an IP Multimedia Subsystem (IMS), a public land mobile network (PLMN), a local area network (LAN), a wide area network (WAN), a metropolitan area network (MAN), a private network such as a corporate intranet, an ad hoc network, the Internet, a fiber optic-based network, a cloud computing network, a third-party services network, an operator services network, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of the example environment 200 may perform one or more functions described as being performed by another set of devices of the example environment 200.

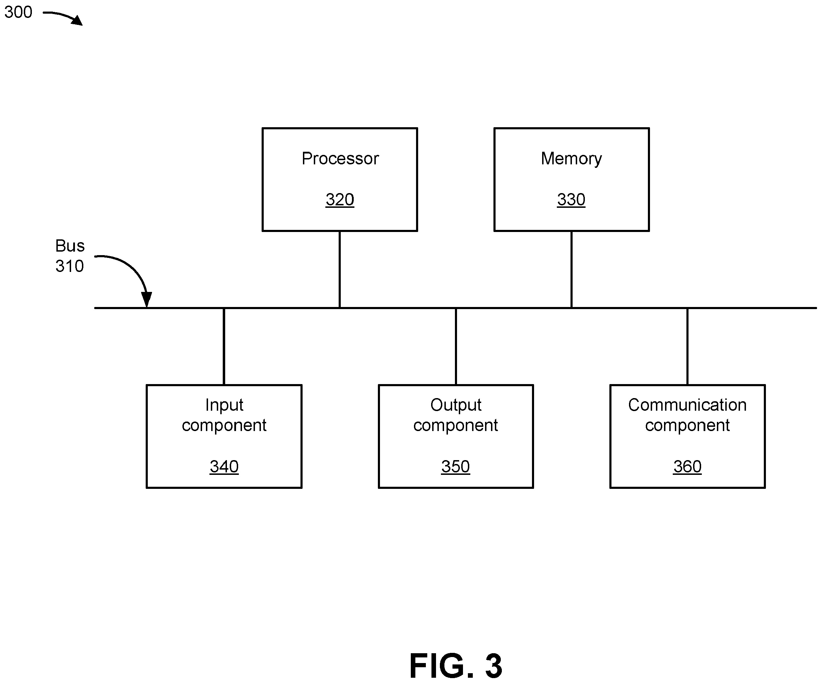

Fig. 3 is a diagram of example components of a device 300, which may correspond to the user device 220, the wireline AN 225, the NSSF 235, the NEF 240, the AUSF 245, the UDM 250, the PCF 260, the AF 245, the AMF 270, the SMF 275, the UPF 260, and/or the AGF 265. In some implementations, the user device 220, the wireline AN 225, the NSSF 235, the NEF 240, the AUSF 245, the UDM 250, the PCF 260, the AF 245, the AMF 270, the SMF 275, the UPF 260, and/or the AGF 265 may include one or more devices 300 and/or one or more components of the device 300. As shown in Fig. 3, the device 300 may include a bus 310, a processor 320, a memory 330, an input component 340, an output component 350, and a communication component 360.

The bus 310 includes one or more components that enable wired and/or wireless communication among the components of the device 300. The bus 310 may couple together two or more components of Fig. 3, such as via operative coupling, communicative coupling, electronic coupling, and/or electric coupling. The processor 320 includes a central processing unit, a graphics processing unit, a microprocessor, a controller, a microcontroller, a digital signal processor, a field-programmable gate array, an application-specific integrated circuit, and/or another type of processing component. The processor 320 is implemented in hardware, firmware, or a combination of hardware and software. In some implementations, the processor 320 includes one or more processors capable of being programmed to perform one or more operations or processes described elsewhere herein.

The memory 330 includes volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. Memory 330 stores information, instructions, and/or software (e.g., one or more software applications) related to the operation of the device 300. In some implementations, the memory 330 includes one or more memories that are coupled to one or more processors (e.g., the processor 320), such as via the bus 310.

The input component 340 enables the device 300 to receive input, such as user input and/or sensed input. For example, the input component 340 may include a touch screen, a keyboard, a keypad, a mouse, a button, a microphone, a switch, a sensor, a global positioning system sensor, an accelerometer, a gyroscope, and/or an actuator. The output component 350 enables the device 300 to provide output, such as via a display, a speaker, and/or a light-emitting diode. The communication component 360 enables the device 300 to communicate with other devices via a wired connection and/or a wireless connection. For example, the communication component 360 may include a receiver, a transmitter, a transceiver, a modem, a network interface card, and/or an antenna.

The device 300 may perform one or more operations or processes described herein. For example, a computer-readable medium (e.g., the memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

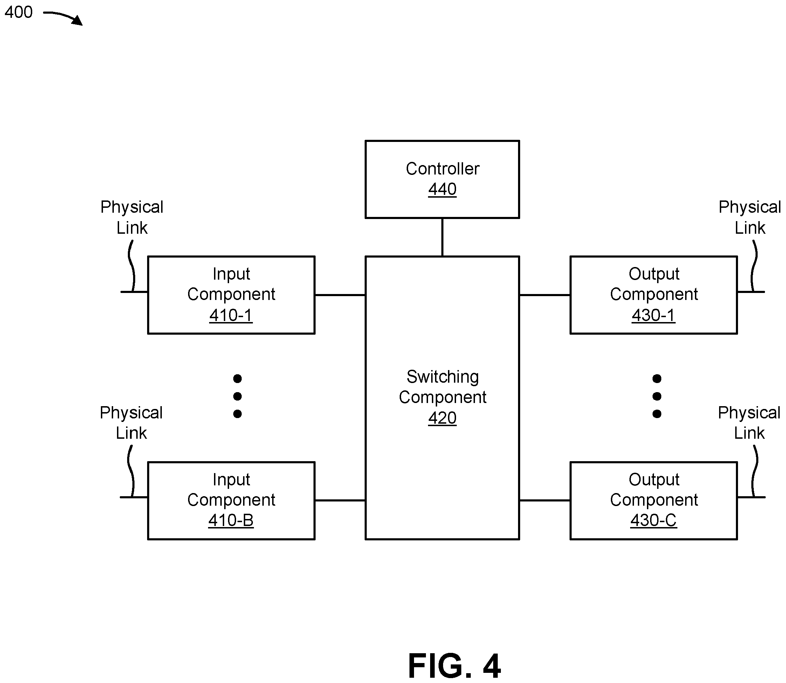

Fig. 4 is a diagram of example components of one or more devices of Fig. 2. The example components may be included in a device 400. The device 400 may correspond to the NSSF 235, the NEF 240, the AUSF 245, the UDM 250, the PCF 260, the AF 245, the AMF 270, the SMF 275, the UPF 260, and/or the AGF 265. In some implementations, the NSSF 235, the NEF 240, the AUSF 245, the UDM 250, the PCF 260, the AF 245, the AMF 270, the SMF 275, the UPF 260, and/or the AGF 265 may include one or more devices 400 and/or one or more components of the device 400. As shown in Fig. 4, the device 400 may include one or more input components 410-1 through 410-B (B ≥ 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

The input component 410 may be one or more points of attachment for physical links and may be one or more points of entry for incoming traffic, such as packets. The input component 410 may process incoming traffic, such as by performing data link layer encapsulation or decapsulation. In some implementations, the input component 410 may transmit and/or receive packets. In some implementations, the input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, the device 400 may include one or more input components 410.

The switching component 420 may interconnect the input components 410 with the output components 430. In some implementations, the switching component 420 may be implemented via one or more crossbars, via busses, and/or with shared memories. The shared memories may act as temporary buffers to store packets from the input components 410 before the packets are eventually scheduled for delivery to the output components 430. In some implementations, the switching component 420 may enable the input components 410, the output components 430, and/or the controller 440 to communicate with one another.

The output component 430 may store packets and may schedule packets for transmission on output physical links. The output component 430 may support data link layer encapsulation or decapsulation, and/or a variety of higher-level protocols. In some implementations, the output component 430 may transmit packets and/or receive packets. In some implementations, the output component 430 may include an output line card that includes one or more packet processing components (e.g., in the form of integrated circuits), such as one or more IFCs, packet forwarding components, line card controller components, output ports, processors, memories, and/or output queues. In some implementations, the device 400 may include one or more output components 430. In some implementations, the input component 410 and the output component 430 may be implemented by the same set of components (e.g., and input/output component may be a combination of the input component 410 and the output component 430).

The controller 440 includes a processor in the form of, for example, a CPU, a GPU, an APU, a microprocessor, a microcontroller, a DSP, an FPGA, an ASIC, and/or another type of processor. The processor is implemented in hardware, firmware, or a combination of hardware and software. In some implementations, the controller 440 may include one or more processors that can be programmed to perform a function.

In some implementations, the controller 440 may include a RAM, a ROM, and/or another type of dynamic or static storage device (e.g., a flash memory, a magnetic memory, an optical memory, etc.) that stores information and/or instructions for use by the controller 440.

In some implementations, the controller 440 may communicate with other devices, networks, and/or systems connected to the device 400 to exchange information regarding network topology. The controller 440 may create routing tables based on the network topology information, may create forwarding tables based on the routing tables, and may forward the forwarding tables to the input components 410 and/or output components 430. The input components 410 and/or the output components 430 may use the forwarding tables to perform route lookups for incoming and/or outgoing packets.

The controller 440 may perform one or more processes described herein. The controller 440 may perform these processes in response to executing software instructions encoded by a computer-readable medium. A computer-readable medium can include a non-transitory memory device. A memory device includes memory space within a single physical storage device or memory space spread across multiple physical storage devices. Additionally, or alternatively a computer-readable medium can include transient media such as carrier signal and transmission media.

Software instructions may be read into a memory and/or storage component associated with the controller 440 from another computer-readable medium or from another device via a communication interface. When executed, software instructions stored in a memory and/or storage component associated with the controller 440 may cause the controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, the device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

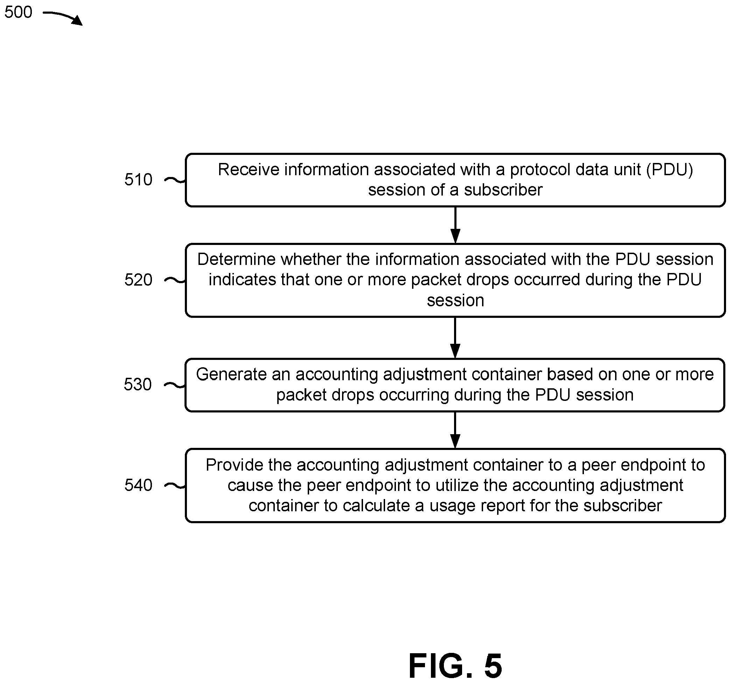

Fig. 5 is a flowchart of an example process 500 for providing an accounting adjustment for packet drops occurring in mobile networks. In some implementations, one or more process blocks of Fig. 5 may be performed by a network device (e.g., the AGF 265). In some implementations, one or more process blocks of Fig. 5 may be performed by another device or a group of devices separate from or including the network device, such as another network device (e.g., the UPF 260). Additionally, or alternatively, one or more process blocks of Fig. 5 may be performed by one or more components of the device 300, such as the processor 320, the memory 330, the input component 340, the output component 350, and/or the communication interface 360. Additionally, or alternatively, one or more process blocks of Fig. 5 may be performed by one or more components of the device 400, such as the input component 410, the switching component 420, the output component 430, and/or the controller 440.

As shown in Fig. 5, process 500 may include receiving information associated with a PDU session of a subscriber (block 510). For example, the network device may receive information associated with a PDU session of a subscriber, as described above. In some implementations, the network device is an access gateway function.

As further shown in Fig. 5, process 500 may include determining whether the information associated with the PDU session indicates that one or more packet drops occurred during the PDU session (block 520). For example, the network device may determine whether the information associated with the PDU session indicates that one or more packet drops occurred during the PDU session, as described above.

As further shown in Fig. 5, process 500 may include generating an accounting adjustment container based on one or more packet drops occurring during the PDU session (block 530). For example, the network device may generate an accounting adjustment container based on one or more packet drops occurring during the PDU session, as described above. In some implementations, the accounting adjustment container includes information identifying a quantity of the one or more packet drops occurring during the PDU session. In some implementations, the accounting adjustment container is provided in an extension header of a GTP-U packet. In some implementations, the extension header is included with another extension header in the GTP-U packet. In some implementations, the one or more packet drops occurred during the PDU session due to one or more of congestion in an access network, disconnection of the subscriber, or link failure in the access network.

As further shown in Fig. 5, process 500 may include providing the accounting adjustment container to a peer endpoint to cause the peer endpoint to utilize the accounting adjustment container to calculate a usage report for the subscriber (block 540). For example, the network device may provide the accounting adjustment container to a peer endpoint to cause the peer endpoint to utilize the accounting adjustment container to calculate a usage report for the subscriber, as described above. In some implementations, the peer endpoint is a user plane function.

In some implementations, providing the accounting adjustment container to the peer endpoint includes providing the accounting adjustment container to the peer endpoint after a time period. In some implementations, providing the accounting adjustment container to the peer endpoint includes determining whether a quantity of the one or more packet drops occurring during the PDU session satisfies a quantity threshold, and providing the accounting adjustment container to the peer endpoint based on the quantity of the one or more packet drops occurring during the PDU session satisfying the quantity threshold. In some implementations, providing the accounting adjustment container to the peer endpoint further causes the peer endpoint to provide the usage report to a core network. In some implementations, providing the accounting adjustment container to the peer endpoint includes providing the accounting adjustment container to the peer endpoint via an interface provided between the network device and the peer endpoint.

In some implementations, process 500 includes receiving an indication of a subscriber termination of the PDU session, and providing the accounting adjustment container to the peer endpoint includes providing, based on receiving the indication, the accounting adjustment container to the peer endpoint before a data plane is cleared.

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel.

Thus, from one perspective, there has now been described a network device which may receive information associated with a protocol data unit (PDU) session of a subscriber, and may determine whether the information associated with the PDU session indicates that one or more packet drops occurred during the PDU session. The network device may generate an accounting adjustment container based on one or more packet drops occurring during the PDU session, and may provide the accounting adjustment container to a peer endpoint to cause the peer endpoint to utilize the accounting adjustment container to calculate a usage report for the subscriber.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

To the extent the aforementioned implementations collect, store, or employ personal information of individuals, it should be understood that such information shall be used in accordance with all applicable laws concerning protection of personal information. Additionally, the collection, storage, and use of such information can be subject to consent of the individual to such activity, for example, through well known "opt-in" or "opt-out" processes as can be appropriate for the situation and type of information. Storage and use of personal information can be in an appropriately secure manner reflective of the type of information, for example, through various encryption and anonymization techniques for particularly sensitive information.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiple of the same item.

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

In the preceding specification, various example embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

Further examples of feature combinations taught by the present disclosure are set out in the following numbered clauses:
1. A method, comprising:
   receiving, by a network device, information associated with a protocol data unit (PDU) session of a subscriber;
   determining, by the network device, whether the information associated with the PDU session indicates that one or more packet drops occurred during the PDU session;
   generating, by the network device, an accounting adjustment container based on one or more packet drops occurring during the PDU session; and
   providing, by the network device, the accounting adjustment container to a peer endpoint to cause the peer endpoint to utilize the accounting adjustment container to calculate a usage report for the subscriber.
2. The method of clause 1, wherein the accounting adjustment container includes information identifying a quantity of the one or more packet drops occurring during the PDU session.
3. The method of clause 1 or clause 2, wherein providing the accounting adjustment container to the peer endpoint comprises:
   providing the accounting adjustment container to the peer endpoint after a time period.
4. The method of any preceding clause, wherein providing the accounting adjustment container to the peer endpoint comprises:
   determining whether a quantity of the one or more packet drops occurring during the PDU session satisfies a quantity threshold; and
   providing the accounting adjustment container to the peer endpoint based on the quantity of the one or more packet drops occurring during the PDU session satisfying the quantity threshold.
5. The method of any preceding clause, wherein providing the accounting adjustment container to the peer endpoint further causes the peer endpoint to provide the usage report to a core network.
6. The method of any preceding clause, wherein the network device is an access gateway function.
7. The method of any preceding clause, wherein the peer endpoint is a user plane function.
8. A network device, comprising:
   one or more memories; and
   one or more processors to:
      receive information associated with a protocol data unit (PDU) session of a subscriber;
      determine whether the information associated with the PDU session indicates that one or more packet drops occurred during the PDU session; and
      selectively:
         prevent an accounting adjustment container from being generated based on no packet drops occurring during the PDU session; or
         generate the accounting adjustment container based on one or more packet drops occurring during the PDU session, and provide the accounting adjustment container to a peer endpoint to cause the peer endpoint to utilize the accounting adjustment container to calculate a usage report for the subscriber.
9. The network device of clause 8, wherein the accounting adjustment container includes information identifying a quantity of the one or more packet drops occurring during the PDU session.
10. The network device of clause 8 or clause 9, the accounting adjustment container is provided in an extension header of a general packet radio service (GPRS) tunnelling protocol user data tunneling (GTP-U) packet.
11. The network device of clause 10, wherein the extension header is included with another extension header in the GTP-U packet.
12. The network device of any of clauses 8 to 11, wherein the one or more processors are further to:
   receive an indication of a subscriber termination of the PDU session,
   wherein the one or more processors, to provide the accounting adjustment container to the peer endpoint, are to:
   provide, based on receiving the indication, the accounting adjustment container to the peer endpoint before a data plane is cleared.
13. The network device of any of clauses 8 to 12, wherein the one or more processors, to provide the accounting adjustment container to the peer endpoint, are to:
   provide the accounting adjustment container to the peer endpoint via an interface provided between the network device and the peer endpoint.
14. The network device of any of clauses 8 to 13, wherein the one or more packet drops occurred during the PDU session due to one or more of
   congestion in an access network,
   disconnection of the subscriber, or
   link failure in the access network.
15. A computer-readable medium encoding a set of instructions, the set of instructions comprising:
   one or more instructions that, when executed by one or more processors of a network device, cause the network device to:
   receive information associated with a protocol data unit (PDU) session of a subscriber;
   determine whether the information associated with the PDU session indicates that one or more packet drops occurred during the PDU session;
   generate an accounting adjustment container based on one or more packet drops occurring during the PDU session; and
   provide the accounting adjustment container to a peer endpoint,
      wherein the accounting adjustment container causes the peer endpoint to utilize the accounting adjustment container to calculate a usage report for the subscriber and to provide the usage report to a core network.
16. The computer-readable medium of clause 15, wherein the one or more instructions, that cause the network device to provide the accounting adjustment container to the peer endpoint, cause the network device to:
   provide the accounting adjustment container to the peer endpoint after a time period.
17. The computer-readable medium of clause 15 or 16, wherein the one or more instructions, that cause the network device to provide the accounting adjustment container to the peer endpoint, cause the network device to:
   determine whether a quantity of the one or more packet drops occurring during the PDU session satisfies a quantity threshold; and
   provide the accounting adjustment container to the peer endpoint based on the quantity of the one or more packet drops occurring during the PDU session satisfying the quantity threshold.
18. The computer-readable medium of any of clauses 15 to 17, wherein the network device is an access gateway function and the peer endpoint is a user plane function.
19. The computer-readable medium of any of clauses 15 to 18, wherein the accounting adjustment container includes information identifying a quantity of the one or more packet drops that occurred during the PDU session.
20. The computer-readable medium of any of clauses 15 to 19, wherein the accounting adjustment container is provided in an extension header of a general packet radio service (GPRS) tunnelling protocol user data tunneling (GTP-U) packet.

## Claims

1. A method, comprising:
receiving, by a network device, information associated with a protocol data unit (PDU) session of a subscriber;
determining, by the network device, whether the information associated with the PDU session indicates that one or more packet drops occurred during the PDU session;
generating, by the network device, an accounting adjustment container based on one or more packet drops occurring during the PDU session; and
providing, by the network device, the accounting adjustment container to a peer endpoint to cause the peer endpoint to utilize the accounting adjustment container to calculate a usage report for the subscriber.

2. The method of claim 1, wherein the accounting adjustment container includes information identifying a quantity of the one or more packet drops occurring during the PDU session.

3. The method of claim 1 or claim 2, wherein providing the accounting adjustment container to the peer endpoint comprises:
providing the accounting adjustment container to the peer endpoint after a time period.

4. The method of any preceding claim, wherein providing the accounting adjustment container to the peer endpoint comprises:
determining whether a quantity of the one or more packet drops occurring during the PDU session satisfies a quantity threshold; and
providing the accounting adjustment container to the peer endpoint based on the quantity of the one or more packet drops occurring during the PDU session satisfying the quantity threshold.

5. The method of any preceding claim, wherein providing the accounting adjustment container to the peer endpoint further causes the peer endpoint to provide the usage report to a core network.

6. The method of any preceding claim, wherein the network device is an access gateway function.

7. The method of any preceding claim, wherein the peer endpoint is a user plane function.

8. A network device, comprising:
one or more memories; and
one or more processors to:
receive information associated with a protocol data unit (PDU) session of a subscriber;
determine whether the information associated with the PDU session indicates that one or more packet drops occurred during the PDU session; and
selectively:
prevent an accounting adjustment container from being generated based on no packet drops occurring during the PDU session; or
generate the accounting adjustment container based on one or more packet drops occurring during the PDU session, and provide the accounting adjustment container to a peer endpoint to cause the peer endpoint to utilize the accounting adjustment container to calculate a usage report for the subscriber.

9. The network device of claim 8, wherein the accounting adjustment container includes information identifying a quantity of the one or more packet drops occurring during the PDU session.

10. The network device of claim 8 or claim 9, the accounting adjustment container is provided in an extension header of a general packet radio service (GPRS) tunnelling protocol user data tunneling (GTP-U) packet.

11. The network device of claim 10, wherein the extension header is included with another extension header in the GTP-U packet.

12. The network device of any of claims 8 to 11, wherein the one or more processors are further to:
receive an indication of a subscriber termination of the PDU session,
wherein the one or more processors, to provide the accounting adjustment container to the peer endpoint, are to:
provide, based on receiving the indication, the accounting adjustment container to the peer endpoint before a data plane is cleared.

13. The network device of any of claims 8 to 12, wherein the one or more processors, to provide the accounting adjustment container to the peer endpoint, are to:
provide the accounting adjustment container to the peer endpoint via an interface provided between the network device and the peer endpoint.

14. The network device of any of claims 8 to 13, wherein the one or more packet drops occurred during the PDU session due to one or more of:
congestion in an access network,
disconnection of the subscriber, or
link failure in the access network.

15. A computer-readable medium encoding a set of instructions, the set of instructions comprising:
one or more instructions that, when executed by one or more processors of a network device, cause the network device to:
receive information associated with a protocol data unit (PDU) session of a subscriber;
determine whether the information associated with the PDU session indicates that one or more packet drops occurred during the PDU session;
generate an accounting adjustment container based on one or more packet drops occurring during the PDU session; and
provide the accounting adjustment container to a peer endpoint,
wherein the accounting adjustment container causes the peer endpoint to utilize the accounting adjustment container to calculate a usage report for the subscriber and to provide the usage report to a core network.
